# FASCICULE DE BREVET EUROPEEN

(11) **EP 2 880 320 B1**
(45) Date de publication et mention de la délivrance du brevet: **03.08.2016**
(21) Numéro de dépôt: 13732466.1
(22) Date de dépôt: 26.06.2013
(51) Int. Cl.: F16B 2/24

(54) **ATTACHE ÉLASTIQUE, DISPOSITIF D'ATTACHE ET PROCÉDÉ DE FABRICATION CORRESPONDANT**
ELASTISCHER HALTER, HALTERUNGSVORRICHTUNG UND VERFAHREN ZUR HERSTELLUNG
ELASTIC FASTENER, FASTENING DEVICE, AND CORRESPONDING METHOD OF MANUFACTURE

(30) Priorité: 01.08.2012 FR 1257501
(43) Date de publication de la demande: 10.06.2015
(73) Titulaire: Faurecia Intérieur Industrie, 92000 Nanterre (FR); A. Raymond et Cie, 38000 Grenoble (FR)
(72) Inventeur: CAMUS, Pascal, F-38450 Vif (FR)
(74) Mandataire: Blot, Philippe Robert Emile
(86) Numéro de dépôt international: PCT/EP2013/063433
(87) Numéro de publication internationale: WO 2014/019773

(56) Documents cités:
- US-A- 3 869 760

## Description

L'invention concerne en général les attaches élastiques pour la fixation de première et seconde pièces l'une à l'autre.

Plus précisément, l'invention porte sur une attache du type comprenant :
- une paroi portant au moins une griffe, destinée à coopérer avec une paroi d'accroche ménagée sur la première pièce ;
- la paroi présentant au moins un orifice à contour fermé ;
- la griffe présentant une base solidaire d'un bord de l'orifice, une extrémité libre opposée à la base et des premier et second bords latéraux opposés l'un à l'autre raccordant chacun l'extrémité libre à la base, la griffe étant inclinée à partir de la base et faisant saillie par rapport à une première face de la paroi.

Une telle attache est connue de US-3 869 760. Cette attache présente une forme de U, avec deux parois en vis-à-vis, ayant chacune un orifice et une griffe en saillie vers l'intérieur du U.

Une telle attache est prévue pour être montée à cheval autour d'une protubérance.

Le montage de cette attache autour de la protubérance nécessite que l'opérateur applique un effort d'enfoncement important. En effet, le griffes sont faiblement élastiques et peuvent difficilement revenir dans le plan de l'orifice. Il en découle également qu'il est difficile de démonter l'attache élastique et de la dégager de la protubérance.

Par ailleurs, les constructeurs automobiles imposent dans leurs cahiers des charges de pouvoir monter de telles attaches élastiques en exerçant un effort inférieur à une limite déterminée, et de pouvoir retirer l'attache élastique sans endommager la pièce sur laquelle elle est fixée.

Dans ce contexte, l'invention vise à proposer une attache élastique qui puisse être fixée sans que les opérateurs aient à appliquer un effort excessif, et qui puisse être facilement retirée.

A cette fin, l'invention porte sur une attache élastique du type précité, caractérisée en ce que :
- la griffe considérée en projection orthogonale dans le plan de l'orifice délimite une première zone de l'orifice, l'orifice présentant en outre une seconde zone libre jouxtant la première zone ;
- la projection du premier bord latéral de la griffe dans le plan de l'orifice jouxte le bord de l'orifice, la projection du second bord latéral de la griffe dans le plan de l'orifice jouxtant la seconde zone.

En d'autres termes, quand la griffe revient par flexion élastique vers le plan de l'orifice, le premier bord latéral de la griffe vient se ranger le long du bord de l'orifice. S'il existe des irrégularités au niveau du bord de l'orifice, notamment des points où la matière a été étirée au moment où la griffe a été formée et pliée par rapport à la paroi, ces irrégularités gênent le débattement de la griffe. Toutefois, du fait que le second bord latéral de la griffe jouxte une zone libre de l'orifice, à savoir la seconde zone, la griffe peut se déporter vers cette seconde zone au cours de son mouvement de flexion. La griffe peut donc revenir par flexion élastique vers l'orifice, sans que son mouvement soit empêché par les irrégularités de matière au niveau du bord de l'orifice.

Dans US 3 869 760, quand la griffe revient dans le plan de l'orifice par flexion élastique, ses deux bords latéraux jouxtent le bord de l'orifice. La griffe ne peut pas se déporter latéralement vers une zone libre de l'orifice. Le débattement de la griffe est donc fortement gêné par d'éventuelles irrégularités de matière se trouvant le long du bord de l'orifice.

L'invention est particulièrement avantageuse quand l'attache élastique est en un matériau métallique, et que la griffe est obtenue par une opération de cambrage. On entend ici par cambrage une opération visant à déformer mécaniquement une zone de la paroi de manière à plier ladite zone pour former la griffe. Cette opération s'accompagne d'un déchirement du matériau métallique constituant la paroi au niveau du premier bord latéral de la griffe. Avant l'opération de cambrage, la griffe est venue de matière avec la paroi le long de son premier bord latéral. Quand la griffe est pliée de manière à adopter une position inclinée par rapport à la paroi, le matériau métallique est déchiré le long du premier bord latéral de la griffe. Ce déchirement est obtenu par cisaillage du matériau métallique le long du premier bord latéral de la griffe. Au cours de cette opération, il apparaît fréquemment des irrégularités de matières le long du bord de l'orifice du fait du déchirement. Par ailleurs, lors du cisaillage de la paroi, le matériau ne se déchire pas dans un plan perpendiculaire à la paroi portant la griffe mais légèrement incliné vers l'intérieur de la griffe, due à l'étirement du matériau métallique, cette inclinaison formant un coin et empêchant le débattement de la griffe.

L'attache élastique est prévue pour la fixation de toute sorte de pièces l'une à l'autre. Plus particulièrement, elle est prévue pour être utilisée dans un véhicule, notamment un véhicule automobile tel qu'une voiture ou un camion. Par exemple, elle est prévue pour la fixation du corps d'un aérateur sur la planche de bord du véhicule. Ce corps est un organe tubulaire à travers lequel le dispositif d'aération du véhicule souffle de l'air vers l'intérieur de l'habitacle. Ce corps est généralement réalisé en matière plastique. Le corps est typiquement fixé au bord d'une ouverture ménagée dans la planche de bord, par une pluralité d'attaches élastiques conformes à l'invention.

La paroi d'accroche destinée à coopérer avec chaque griffe, est alors située sur la surface périphérique externe du corps de l'aérateur.

L'attache élastique comporte typiquement deux griffes, identiques l'une à l'autre. La paroi présente alors deux orifices à contours fermés, chaque griffe ayant sa base solidaire du bord d'un des deux orifices. La paroi comporte en variante une seule griffe, ou trois griffes ou plus de trois griffes.

La griffe peut présenter toute sorte de forme. Son extrémité libre notamment peut être pointue, ou arrondie, ou de forme rectangulaire ou anguleuse, etc.. Par exemple, elle peut présenter un bord libre convexe en V, pointant à l'opposé de la base, ou au contraire un bord concave.

On entend ici par projection orthogonale de la griffe dans le plan de l'orifice la projection de chacun des points de la griffe, suivant une direction perpendiculaire au plan de l'orifice, dans le plan où s'inscrit cet orifice. Cette projection a une forme déterminée, qui s'inscrit entièrement à l'intérieur de l'orifice. Cette projection occupe et définit la première zone de l'orifice. La seconde zone de l'orifice est constituée par toute la surface de l'orifice qui n'est pas occupée par la première zone. Cette seconde zone est libre, au sens où elle est constituée de vide. Exprimé différemment, la première zone correspond à la surface qu'occupe la griffe quand elle est ramenée dans l'orifice.

Le fait que la projection du premier bord latéral de la griffe dans le plan de l'orifice jouxte le bord de cet orifice est entendu ici comme signifiant que la projection de ce premier bord latéral s'étend le long du bord de l'orifice, avec un faible écartement entre la projection du premier bord et le bord de l'orifice. Par exemple, cet écartement est inférieur à 1 mm en tout point du premier bord latéral.

Comme indiqué plus haut, la projection du second bord latéral de la griffe dans le plan de l'orifice jouxte la seconde zone. En d'autres termes, la projection du second bord latéral de la griffe jouxte une zone vide, suffisamment large pour permettre à la griffe de s'écarter du bord de l'orifice quand elle revient par flexion dans le plan de l'orifice, cet écartement tendant à éloigner le premier bord latéral de la griffe de la zone de bord qu'il jouxte.

L'orifice peut avoir toutes sortes de formes. Généralement, il a une forme irrégulière, dictée par des exigences techniques relatives essentiellement à l'opération de cambrage de la griffe et/ou au besoin de flexibilité de la griffe.

L'attache élastique peut également présenter une ou plusieurs des caractéristiques ci-dessous, considérées individuellement ou selon toutes les combinaisons techniquement possibles.

Avantageusement, la projection de l'extrémité libre de la griffe dans le plan de l'orifice jouxte au moins partiellement la seconde zone.

Ainsi, l'extrémité libre de la griffe peut elle aussi se décaler vers la seconde zone quand la griffe revient dans le plan de l'orifice. La forme de cette projection, et le pourcentage du bord de cette projection qui jouxte la seconde zone, dépendent de la forme de l'extrémité libre de la griffe.

En tout état de cause, la seconde zone s'étend de préférence sur toute la hauteur de la griffe, c'est-à-dire depuis la base jusqu'à l'extrémité libre de la griffe.

De préférence, la zone de la paroi de l'attache élastique dans laquelle est ménagé l'orifice s'inscrit dans un plan, la paroi comportant un relief en saillie par rapport au plan formant un poka yoke.

On entend ici par poka yoke un relief formant détrompeur, et étant prévu pour que l'attache ne puisse pas être montée dans une position anormale, par exemple à l'envers. Le relief peut présenter toutes sortes de formes. Il peut être en saillie soit par rapport à la première face de la paroi soit par rapport à une seconde face de la paroi opposée à la première face.

Typiquement, l'attache comporte au moins une aile définissant avec la paroi une zone en U, la griffe étant inclinée vers l'intérieur du U.

Ainsi, la griffe est protégée par l'aile avant montage de l'attache sur la première pièce. On limite ainsi le risque que cette griffe soit abimée au cours du stockage de l'attache élastique, ou au cours du transport. Ceci est particulièrement important du fait que les attaches sont fréquemment stockées en vrac dans un récipient.

L'aile présente avantageusement une partie sensiblement parallèle à la paroi et située en vis-à-vis de l'orifice.

Ceci contribue à protéger l'extrémité de la griffe.

Ladite partie de l'aile située en vis-à-vis de l'orifice est typiquement une partie terminale de l'aile. Elle est située exactement en regard de l'orifice, de telle sorte que l'extrémité de la griffe est située exactement entre la paroi et ladite partie de l'aile.

Typiquement, la paroi comporte deux griffes, l'attache comportant deux ailes et une lame élastique solidaire de la paroi est destinée à coopérer avec la seconde pièce, la lame élastique étant située entre les deux ailes, la griffe présentant des vides entre la lame élastique et les deux ailes.

La lame élastique est prévue pour coopérer avec la seconde pièce de manière à bloquer la première pièce par rapport à la seconde pièce.

Elle est raccordée à un bord de la paroi, par exemple à une portion centrale du bord de la paroi. Les deux ailes sont raccordées au même bord de la paroi, par exemple à des zones situées de part et d'autre de l'aile. Les ailes et la lame élastique sont complètement indépendantes les unes des autres, au sens où il n'existe aucun point de contact direct entre les ailes et la lame élastique. Les ailes et la lame élastique sont seulement raccordées les unes aux autres par la paroi.

La fonction d'assemblage et de positionnement sur la première pièce est ainsi dissociée de la fonction de fixation sur la seconde pièce.

Selon un second aspect, l'invention porte sur un dispositif d'attache, comprenant un logement ménagé sur la première pièce, et une attache selon l'une quelconque des revendications précédentes, la paroi portant la griffe étant destinée à être engagée dans ledit logement.

Le logement est typiquement constitué d'une matière plastique. Il est par exemple venu de matière, par exemple venu d'injection, avec la première pièce. En variante, il est formé sur une pièce annexe, qui est elle-même rapportée sur la première pièce.

Avantageusement, le logement est délimité par la paroi d'accroche et par une paroi d'appui arrière sensiblement en vis-à-vis l'une de l'autre, la paroi de l'attache étant prévue pour être engagée dans le logement dans une position où la griffe est en appui contre la paroi d'accroche et où une seconde face de la paroi, opposée à la première face, est en appui sur la paroi d'appui arrière.

Ainsi, la griffe est pressée contre la paroi d'accroche. Elle coopère avec cette paroi d'accroche pour empêcher le dégagement de l'attache élastique hors du logement. Toutefois, la flexibilité de la griffe, obtenue du fait de la forme de la seconde zone, permet de dégager l'attache élastique et de la retirer hors du logement sans endommager le logement.

La paroi d'accroche et la paroi d'appui arrière sont sensiblement rectilignes et parallèles l'une à l'autre. La paroi de l'attache vient se placer entre la paroi d'accroche et la paroi d'appui arrière.

Typiquement, la zone de ladite paroi de l'attache dans laquelle est ménagé l'orifice s'inscrit dans un plan, la paroi comportant un relief en saillie par rapport audit plan formant un poka yoke, l'une de la paroi d'accroche et de la paroi d'appui arrière du logement comprenant un relief en creux pour la réception du relief en saillie quand la paroi est engagée dans le logement.

On évite ainsi que l'attache élastique soit montée dans le mauvais sens. Typiquement, le relief en creux est formé dans la paroi d'appui arrière.

Avantageusement, la paroi d'accroche du logement porte au moins une nervure de rigidification dans une zone destinée à venir au contact de la griffe.

Cette nervure est typiquement placée d'un côté de la paroi d'accroche tournée vers l'extérieur du logement.

Selon un troisième aspect, l'invention vise un procédé de fabrication d'une attache élastique ayant les caractéristiques ci-dessus, caractérisé en ce qu'il comprend les étapes suivantes :
- obtenir une ébauche d'attache en un matériau métallique, avec une paroi pleine ;
- découper la deuxième zone dans la paroi, en formant ainsi le second bord latéral de la griffe ;
- plier la griffe, en déchirant le matériau métallique le long d'une jonction entre le premier bord latéral de la griffe et le bord de l'orifice.

Ce procédé permet d'obtenir de manière économique, avec peu d'étapes de fabrication, une attache présentant les avantages ci-dessus. Notamment, l'étape de cambrage de la griffe, qui entraîne un déchirement du matériau métallique le long de la jonction entre le premier bord latéral de la griffe et le bord de l'orifice, ne compromet pas l'élasticité de la griffe du fait que la projection du second bord latéral de la griffe dans le plan de l'orifice jouxte la seconde zone. Le fait que l'ébauche d'attache en un matériau métallique présente une paroi pleine doit ici être entendu comme signifiant que le ou les orifices ne sont pas encore découpés dans le matériau métallique. La paroi est ainsi pleine dans la zone dans laquelle l'orifice va être ménagé.

La deuxième zone de la paroi est découpée en utilisant tous les procédés adaptés, par exemple par poinçonnage.

L'étape de pliage de la griffe, encore appelée cambrage, est réalisée par estampage ou emboutissage.

L'étape de découpe de la deuxième zone est toujours réalisée avant l'étape de pliage de la griffe.

D'autres caractéristiques et avantages de l'invention ressortiront de la description détaillée qui en est donnée ci-dessous, à titre indicatif et nullement limitatif, en référence aux figures annexées, parmi lesquelles :
- la figure 1 est une vue en coupe, de côté, d'un corps d'aérateur fixé à la planche de bord par l'intermédiaire d'un dispositif d'attache conforme à l'invention, le corps d'aérateur et la planche de bord n'étant que partiellement représentés ;
- la figure 2 est une vue en perspective du dispositif d'attache de la figure 1 ;
- la figure 3 est une vue de face de l'attache de la figure 1 ;
- la figure 4 est une vue de dessous de l'attache de la figure 1 ;
- la figure 5 est une vue de dessus du logement destiné à recevoir l'attache ; et
- et les figures 6 à 8 illustrent différentes étapes de fabrication de l'attache de la figure 1.

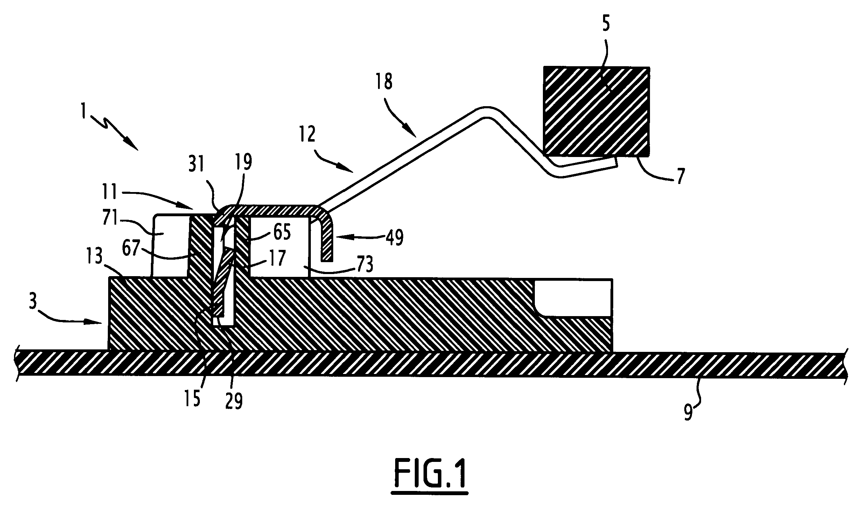

Comme illustré sur la figure 1, le dispositif d'attache 1 est prévu pour fixer un corps d'aérateur 3 à une planche de bord 5. La planche de bord 5 et le corps d'aérateur 3 ne sont que partiellement représentés sur la figure 1.

La planche de bord 5 présente une ouverture 7 dans laquelle est engagé le corps d'aérateur 3. Le corps d'aérateur 3 présente une forme de manchon tubulaire. Il délimite intérieurement un conduit 9 pour le passage de l'air soufflé par la ventilation du véhicule.

Le corps d'aérateur 3 est fixé à la planche de bord par plusieurs dispositifs d'attache 1 identiques les uns aux autres, répartis autour du corps 3.

Chaque dispositif d'attache 1 comporte un logement 11 ménagé sur un support 13 solidaire du corps 9, et une attache élastique 12. Le support 13 est venu de matière avec le corps d'aérateur 9, ou est rapporté sur celui-ci.

L'attache 12 comprend une paroi 15 portant deux griffes 17 et une lame élastique 18, solidaire de la paroi 15. La paroi 15 est engagée dans le logement 11 de manière réversible. La lame élastique 18 coopère avec le bord de l'ouverture 7, comme visible sur la figure 1.

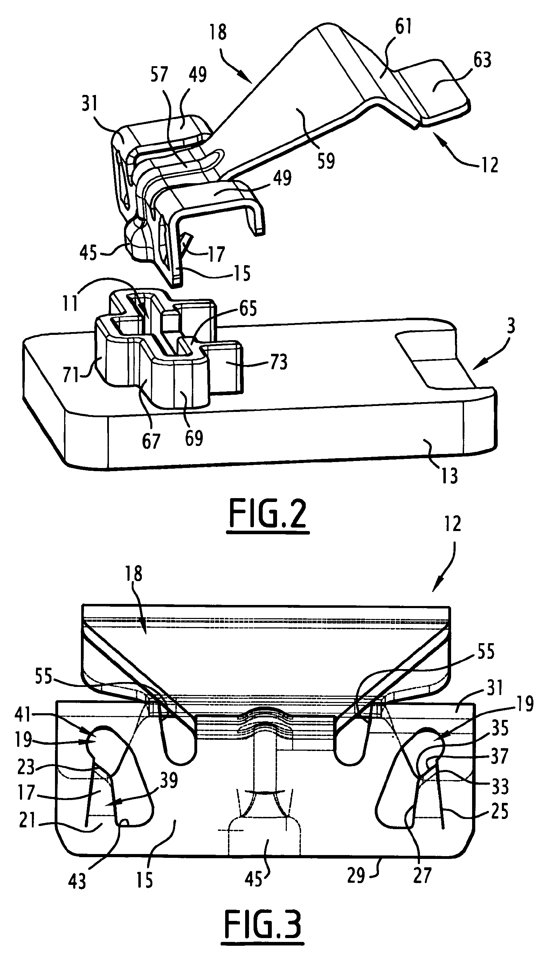

Comme le montre la figure 3, la paroi 15 comporte deux orifices 19 à contour fermé. Chaque griffe 17 présente quant à elle une base 21 solidaire du bord d'un des orifices 19, une extrémité libre 23 opposée à la base 21, et des premiers seconds bords latéraux 25 et 27 opposés l'un à l'autre, raccordant chacun l'extrémité libre 23 à la base 21.

Comme visible sur la figure 1, la paroi 15 présente une forme générale rectangulaire, avec un bord libre 29 et un bord 31 parallèle et opposé au bord libre 29. La lame 18 est raccordée au bord 31.

La base 21 de chaque griffe 17 est venue de matière avec un tronçon du bord de l'orifice 19 tourné vers le bord libre 29.

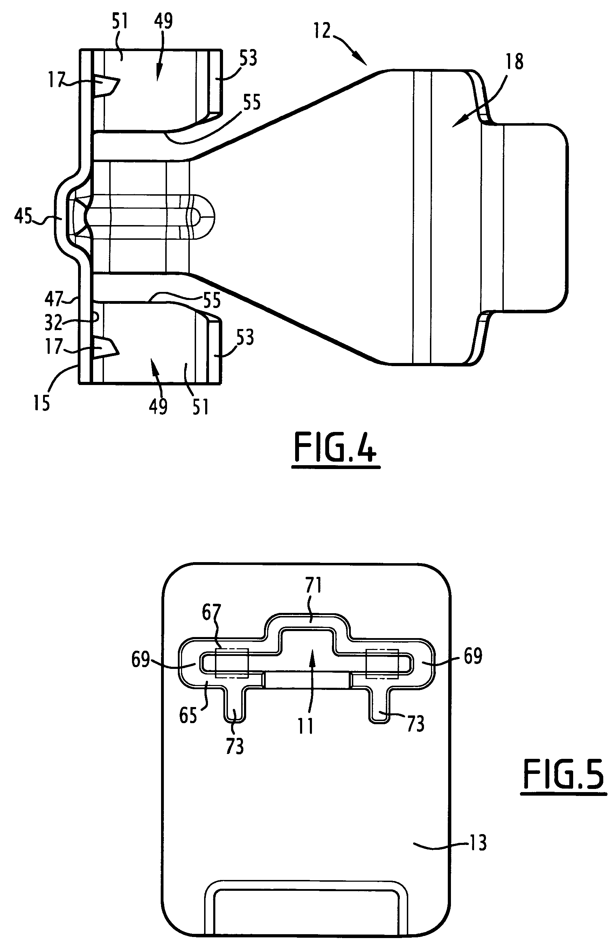

La griffe 17 s'étend en oblique, à partir de la base 21, en direction du bord 31. Elle fait saillie par rapport à une première grande face 32 de la paroi 15 (figures 1 et 4).

La partie d'extrémité 23 de chaque griffe est formée en pointe. Elle est délimitée par deux côtés 33, 35 prolongeant les bords latéraux 25, 27 respectivement, et convergeant vers une pointe 37. Le côté 33 est aligné avec le bord 25. Le côté 35 est incliné par rapport au bord 27.

Les bords latéraux 25, 27 convergent légèrement l'un vers l'autre à partir de la base 21.

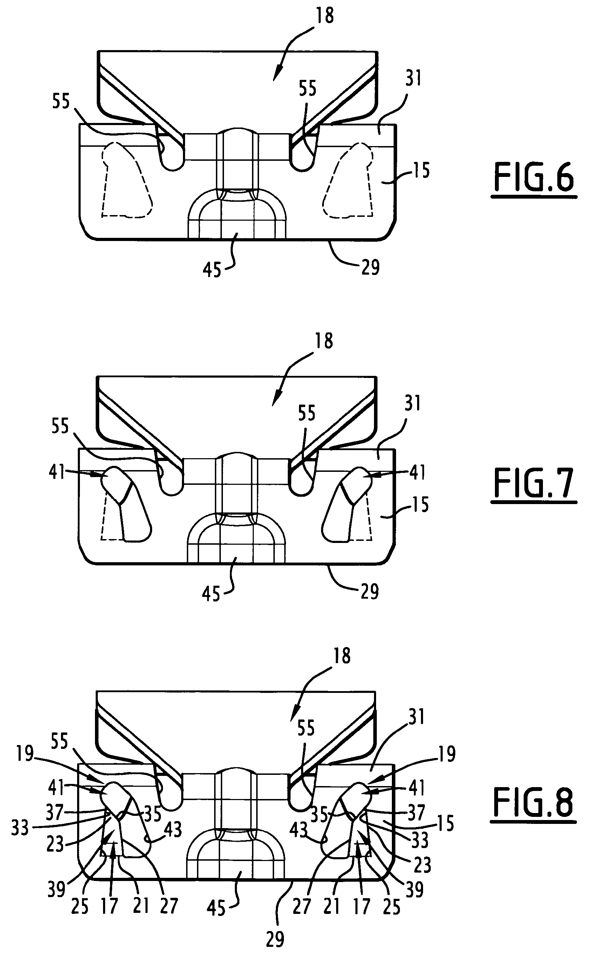

Comme visible sur les figures 3 et 8, chaque orifice 19 peut être subdivisé en des première et seconde zones 39, 41. La première zone 39 correspond à la projection orthogonale de la griffe 17 dans le plan de l'orifice 19. La seconde zone 41 est constituée par le reste de l'orifice 19, c'est-à-dire par toute la surface de l'orifice 19 qui n'est pas occupée dans la première zone 39. Comme visible par exemple sur la figure 8, la projection du premier bord latéral 25 de la griffe dans le plan de l'orifice jouxte le bord 43 de l'orifice. De même, la projection du premier côté 33 de la partie d'extrémité jouxte le bord 43. En revanche, les projections respectives du second bord latéral et du second côté 27, 35 jouxtent la seconde zone 41. Ainsi, la seconde zone 41 s'étend sur toute la hauteur de la projection de la griffe 17, et se prolonge au-delà de l'extrémité libre de la griffe 17.

Les orifices 19 sont situés dans deux parties latérales opposées de la paroi 15. La partie centrale de la paroi 15 comporte un relief 45 en saillie par rapport à une seconde face 47 de la paroi opposée à la première face 32. Le relief 45 est obtenu par déformation locale de la paroi 15. Comme expliqué plus bas, ce relief forme un poka yoke interdisant de monter l'attache élastique dans le mauvais sens.

L'attache 12 comporte encore deux ailes 49 définissant chacune avec la paroi 15 une zone en U. Chaque aile 49 a une forme d'équerre, et comporte une partie 51 solidaire de la paroi 15, et une partie 53 libre, sensiblement perpendiculaire à la partie 51. La partie 51 se raccorde au niveau du bord 31 de la paroi 15, les deux ailes encadrant la lame élastique 18. Les parties 53 s'étendent à partir de la partie 51 vers le bord libre 29. Ils sont chacun parallèle et disposé en regard de la zone de la paroi 15 dans laquelle est ménagée un des orifices 19.

Les griffes 17 pointent vers le centre de la zone en U. La partie d'extrémité 23 de chaque griffe est située entre la partie 53 et la paroi 32.

On voit sur la figure 1 que la partie 53 présente une hauteur inférieure à celle de la paroi 15.

La lame élastique 18 est séparée des ailes 49 par des vides 55. Ces vides sont constitués par des échancrures, ménagées entre les parties 51 et la lame 18. Les échancrures sont ouvertes à l'opposé de la paroi 15.

La lame élastique 18 comporte plusieurs tronçons 57, 59, 61, 63, placés dans le prolongement les uns des autres, et inclinés les uns par rapport aux autres. Ces tronçons sont conformés de manière à permettre la mise en appui de la lame élastique 18 sur le bord de l'ouverture 7, par exemple à l'angle entre les tronçons 61 et 63. La lame élastique 18 peut ainsi fléchir de manière élastique soit radialement vers l'axe central du corps d'aérateur 3, soit parallèlement à l'axe central du corps d'aérateur.

Comme visible sur la figure 5, le logement 11 est délimité par une paroi d'accroche 65 et une paroi d'appui arrière 67 sensiblement planes et parallèles l'une à l'autre. Les parois 65 et 67 sont raccordées l'une à l'autre par des parois d'extrémités 69. La paroi d'appui arrière 67 présente un relief en creux 71 prévu pour recevoir le relief en saillie 45. Le relief en creux 71 fait saillie vers l'extérieur du logement. La paroi d'accroche 65 porte deux nervures 73 destinés à rigidifier les zones de la paroi d'accroche 65 destinées à coopérer avec les griffes 17. Le logement 11 est fermé vers le support 13, et est ouvert à l'opposé du support 13. Il est à noter, comme le montre la figure 1, que les parois 65, 67, 69 délimitent un volume interne de réception de la paroi 15, qui se prolonge dans l'épaisseur du support 13, au-delà de la base des parois 65, 67, 69.

L'attache 12 est fixée à l'aérateur 9 en enfonçant la paroi 15 dans le logement 11. La seconde face 47 de la paroi 15 vient en appui contre la paroi d'appui arrière 67. Le relief en saillie 45 est reçu dans le relief en creux 71. Il n'est pas possible de monter l'agrafe en sens inverse car la paroi d'accrochage 65 ne comporte pas un relief creux équivalent au relief 71.

L'écartement entre les parois 65 et 67 est inférieur à l'épaisseur de la paroi 15 additionnée de la hauteur sur laquelle les griffes 17 font saillies par rapport à la première face 32 de la paroi.

Les griffes 17 sont ainsi prises élastiquement entre les parois 65 et 67 et sont repoussées par flexion vers les orifices 19. Du fait de la flexibilité des griffes 17, l'effort à fournir par l'opérateur pour enfoncer la paroi 15 dans le logement 11 n'est pas excessif.

Une fois la paroi 15 enfoncée dans le logement 11, les ailes 49 viennent chevaucher la paroi d'accrochage 65 et les nervures de rigidification 73.

La lame élastique 18 vient en appui contre le bord de l'ouverture 7 au niveau de l'angle entre les tronçons 61 et 63.

Le procédé de fabrication de l'agrafe élastique va maintenant être détaillé en référence aux figures 6 à 8.

Le procédé comporte les étapes suivantes :
- approvisionner un flanc en un matériau métallique, ici un acier inoxydable,
- former une ébauche d'attache, représentée sur la figure 6, par estampage ou emboutissage,
- découper ensuite la deuxième zone 41 de chaque orifice 19 dans la paroi 15, comme illustré sur la figure 7,
- plier la griffe 17, du côté de la première face 32 de la paroi 15, en déchirant le matériau métallique le long de la ligne de jonction entre d'une part le premier bord latéral 25 et le premier côté 33, et d'autre part le bord 43 de l'orifice 19.

L'étape de formage de l'ébauche permet de mettre en forme au moins la paroi 15, les ailes 49 et la lame élastique 18. Elle peut nécessiter une ou plusieurs opérations d'estampage ou d'emboutissage. La paroi 15 de l'ébauche est pleine, au sens où les orifices 19 ne sont pas encore formés. Sur la figure 6, les limites des orifices 19 sont représentées en traits interrompus.

L'étape de découpage est réalisée par exemple par poinçonnage. Les limites de la première zone sont représentées en traits interrompus sur la figure 7.

L'étape de pliage est réalisée par estampage ou emboutissage. Cette étape est réalisée en une passe ou en plusieurs passes.

## Revendications

1. Attache élastique pour la fixation de première et seconde pièces (3, 5) l'une à l'autre, l'attache (12) comprenant :
- une paroi (15) portant au moins une griffe (17), destinée à coopérer avec une paroi d'accroche (65) ménagée sur la première pièce (3) ;
- la paroi (15) présentant au moins un orifice à contour fermé (19) ;
- la griffe (17) présentant une base (21) solidaire d'un bord (43) de l'orifice (19), une extrémité libre (23) opposée à la base (21), et des premier et second bords latéraux (25, 27) opposés l'un à l'autre raccordant chacun l'extrémité libre (23) à la base (21), la griffe (17) étant inclinée à partir de la base (21) et faisant saillie par rapport à une première face (32) de la paroi (15) ;
**caractérisée en ce que** :
- la griffe (17) considérée en projection orthogonale dans le plan de l'orifice (19) délimite une première zone (39) de l'orifice (19), l'orifice (19) présentant en outre une seconde zone (41) libre jouxtant la première zone (39) ;
- la projection du premier bord latéral (25) de la griffe (17) dans le plan de l'orifice (19) jouxte le bord (43) de l'orifice (19), la projection du second bord latéral (27) de la griffe (17) dans le plan de l'orifice (19) jouxtant la seconde zone (41).

2. Attache selon la revendication 1, **caractérisée en ce que** la projection de l'extrémité libre (23) de la griffe (17) dans le plan de l'orifice (19) jouxte au moins partiellement la seconde zone (41).

3. Attache selon la revendication 1 ou 2, **caractérisée en ce que** la zone de ladite paroi (15) dans laquelle est ménagé l'orifice (19) s'inscrit dans un plan, la paroi (15) comportant un relief (45) en saillie par rapport audit plan formant un poka yoke.

4. Attache selon l'une quelconque des revendications précédentes, **caractérisée en ce qu'**elle comporte au moins une aile (49) définissant avec la paroi (15) une zone en U, la griffe (17) étant inclinée vers l'intérieur du U.

5. Attache selon la revendication 4, **caractérisée en ce que** l'aile (49) présente une partie (53) sensiblement parallèle à la paroi (15) et située en vis-à-vis de l'orifice (19).

6. Attache selon la revendication 4 ou 5, **caractérisée en ce que** la paroi (15) comporte deux griffes (17), l'attache comportant deux ailes (49) et une lame élastique (18) solidaire de la paroi (15) et destinée à coopérer avec la seconde pièce (5), la lame élastique (18) étant située entre les deux ailes (49), l'attache présentant des vides (55) entre la lame élastique (18) et les deux ailes (49).

7. Dispositif d'attache, comprenant un logement (11) ménagé sur la première pièce (3), et une attache (12) selon l'une quelconque des revendications précédentes, la paroi (15) portant la griffe (17) étant adaptée pour être engagée dans ledit logement (11).

8. Dispositif d'attache selon la revendication 7, **caractérisée en ce que** le logement (11) est délimité par la paroi d'accroche (65) et par une paroi d'appui arrière (67) sensiblement en vis-à-vis l'une de l'autre, la paroi (15) de l'attache étant prévue pour être engagée dans le logement (11) dans une position où la griffe (17) est en appui contre la paroi d'accroche (65) et où une seconde face (47) de la paroi (15), opposée à la première face (32), est en appui sur la paroi d'appui arrière (67).

9. Dispositif d'attache selon la revendication 8, **caractérisée en ce que** la zone de ladite paroi (15) de l'attache dans laquelle est ménagé l'orifice (19) s'inscrit dans un plan, la paroi (15) comportant un relief (45) en saillie par rapport audit plan formant poka yoke, l'une de la paroi d'accroche et de la paroi d'appui arrière (65, 67) du logement (11) comprenant un relief en creux (71) pour la réception du relief en saillie (45) quand la paroi (15) est engagée dans le logement (11).

10. Dispositif d'attache selon l'une quelconques des revendications 7 à 9, **caractérisée en ce que** la paroi d'accroche (65) du logement (11) porte au moins une nervure de rigidification (73) dans une zone destinée à venir au contact de la griffe (17).

11. Procédé de fabrication d'une attache élastique selon l'une quelconque des revendications 1 à 6, **caractérisée en ce qu'**il comprend les étapes suivantes :
- obtenir une ébauche d'attache en un matériau métallique, avec une paroi (15) pleine ;
- découper la deuxième zone (41) dans la paroi (15), en formant ainsi le second bord latéral (27) de la griffe (17) ;
- plier la griffe (17), en déchirant le matériau métallique le long d'une jonction entre le premier bord latéral (25) de la griffe (17) et le bord (43) de l'orifice (19).

## Patentansprüche

1. Elastisches Befestigungsteil zur Befestigung eines ersten und eines zweiten Bauteils (3, 5) aneinander, wobei das Befestigungsteil (12) aufweist:
- eine Wand (15), die wenigstens eine Kralle (17) trägt, die dazu bestimmt ist, um mit einer Befestigungswand (65) zusammenzuwirken, die an dem ersten Bauteil (3) bereitgestellt ist,
- wobei die Wand (15) wenigstens eine Öffnung mit geschlossenem Umriss (19) aufweist,
- wobei die Kralle (17) aufweist eine Basis (21), die fest mit einem Rand (43) der Öffnung (19) verbunden ist, ein freies Ende (23) entgegengesetzt zu der Basis (21) und einen ersten und einen zweiten Seitenrand (25, 27), die einander gegenüberliegen und jeder das freie Ende (23) mit der Basis (21) verbindet, wobei die Kralle (17) ausgehend von der Basis (21) geneigt ist und bezüglich einer ersten Fläche (32) der Wand (15) vorsteht,
**dadurch gekennzeichnet, dass**:
- die Kralle (17), gesehen in der orthogonalen Projektion in der Ebene der Öffnung (19), einen ersten Bereich (39) der Öffnung (19) begrenzt, wobei die Öffnung (19) ferner einen zweiten, freien Bereich (41) hat, der an den ersten Bereich (39) angrenzt,
- wobei die Projektion des ersten Seitenrands (25) der Kralle (17) in der Ebene der Öffnung (19) an den Rand (43) der Öffnung (19) angrenzt, wobei die Projektion des zweiten Seitenrands (27) der Kralle (17) in der Ebene der Öffnung (19) an den zweiten Bereich (41) angrenzt.

2. Befestigungsteil gemäß Anspruch 1, **dadurch gekennzeichnet, dass** die Projektion des freien Endes (23) der Kralle (17) in der Ebene der Öffnung (19) wenigstens teilweise an den zweiten Bereich (41) angrenzt.

3. Befestigungsteil gemäß Anspruch 1 oder 2, **dadurch gekennzeichnet, dass** der Bereich der besagten Wand (15), in welcher die Öffnung (19) bereitgestellt ist, in einer Ebene liegt, wobei die Wand (15) eine Ausformung (45) aufweist, die bezüglich der besagten Ebene vorsteht, bildend ein Poka Yoke.

4. Befestigungsteil gemäß irgendeinem der vorhergehenden Ansprüche, **dadurch gekennzeichnet, dass** es wenigstens einen Flügel (49) aufweist, der mit der Wand (15) einen U-förmigen Bereich definiert, wobei die Kralle (17) zu dem Inneren des U hin geneigt ist.

5. Befestigungsteil gemäß Anspruch 4, **dadurch gekennzeichnet, dass** der Flügel (49) einen Abschnitt (53) hat, der im Wesentlichen parallel zu der Wand (15) ist und der Öffnung (19) gegenüber angeordnet ist.

6. Befestigungsteil gemäß Anspruch 4 oder 5, **dadurch gekennzeichnet, dass** die Wand (15) zwei Krallen (17) aufweist, wobei das Befestigungsteil zwei Flügel (49) und ein elastisches Blatt (18) aufweist, das mit der Wand (15) fest verbunden ist und dazu bestimmt ist, mit dem zweiten Bauteil (5) zusammenzuwirken, wobei das elastische Blatt (18) zwischen den beiden Flügeln (49) angeordnet ist, wobei das Befestigungsteil Hohlräume (55) zwischen dem elastischen Blatt (18) und den beiden Flügeln (49) hat.

7. Befestigungsvorrichtung, aufweisend eine Aufnahme (11), die an dem ersten Bauteil (3) bereitgestellt ist, und ein Befestigungsteil (12) gemäß irgendeinem der vorhergehenden Ansprüche, wobei die Wand (15), welche die Kralle (17) trägt, dazu angepasst ist, um in die besagte Aufnahme (11) einzugreifen.

8. Befestigungsvorrichtung gemäß Anspruch 7, **dadurch gekennzeichnet, dass** die Aufnahme (11) von der Befestigungswand (65) und von einer hinteren Auflagewand (67) begrenzt wird, die einander im Wesentlichen gegenüberliegend sind, wobei die Wand (15) des Befestigungsteils dazu vorgesehen ist, um in die Aufnahme (11) einzugreifen in einer Position, wo die Kralle (17) in Auflage gegen die Befestigungswand (65) ist und wo eine zweite Fläche (47) der Wand (15), die der ersten Fläche (32) entgegengesetzt ist, in Auflage an der hinteren Auflagewand (67) ist.

9. Befestigungsvorrichtung gemäß Anspruch 8, **dadurch gekennzeichnet, dass** der Bereich der besagten Befestigungswand (15), in welcher die Öffnung (19) bereitgestellt ist, in einer Ebene liegt, wobei die Wand (15) eine Ausformung (45) aufweist, die bezüglich der besagten Ebene vorsteht, bildend ein Poka Yoke, wobei eine von der Befestigungswand und der hinteren Auflagewand (65, 67) der Aufnahme (11) eine hohle Ausformung (71) aufweist für die Aufnahme der vorstehenden Ausformung (45), wenn die Wand (15) in die Aufnahme (11) eingreift.

10. Befestigungsvorrichtung gemäß irgendeinem der Ansprüche 7 bis 9, **dadurch gekennzeichnet, dass** die Befestigungswand (65) der Aufnahme (11) wenigstens eine Verstärkungsrippe (73) in einem Bereich trägt, der dazu vorgesehen ist, mit der Kralle (17) in Kontakt zu kommen.

11. Verfahren zur Herstellung eines elastischen Befestigungsteils gemäß irgendeinem der Ansprüche 1 bis 6, **dadurch gekennzeichnet, dass** es die folgenden Schritte aufweist:
- Erlangen eines Befestigungsteil-Rohlings aus einem Metallmaterial, mit einer ebenen Wand (15),
- Schneiden des zweiten Bereichs (41) in die Wand (15) unter entsprechendem Ausbilden des zweiten Seitenrands (27) der Kralle (17),
- Biegen der Kralle (17) unter Einreißen des Metallmaterials entlang einer Verbindung zwischen dem ersten Seitenrand (25) der Kralle (17) und dem Rand (43) der Öffnung (19) .

## Claims

1. A resilient fastener for the fastening of first and second component parts (3, 5) to each other, the fastener (12) comprising:
- a wall (15) bearing at least one claw (17) intended to cooperate with a gripping wall (65) provided on the first component part (3);
- the wall (15) having at least one closed contour orifice (19);
- the claw (17) having a base (21) integrally attached to an edge (43) of the orifice (19), a free end (23) opposite the base (21), and first and second lateral edges (25, 27) positioned opposite one another each connecting the free end (23) to the base (21), the claw (17) being inclined from the base (21) and projecting outwards relative to a first surface (32) of the wall (15);
**characterised in that**:
- the claw (17) viewed in orthogonal projection in the plane of the orifice (19) delimits a first zone (39) of the orifice (19), the orifice (19) further having a second free zone (41) adjoining the first zone (39);
- the projection of the first lateral edge (25) of the claw (17) in the plane of the orifice (19) adjoins the edge (43) of the orifice (19), the projection of the second lateral edge (27) of the claw (17) in the plane of the orifice (19) adjoining the second zone (41).

2. A fastener according to claim 1, **characterised in that** the projection of the free end (23) of the claw (17) in the plane of the orifice (19) at least partially adjoins the second zone (41).

3. A fastener according to claim 1 or 2, **characterised in that** the zone of the said wall (15) in which is formed the orifice (19) is part of a plane, the wall (15) including a relief (45) projecting outwards in relation to the said plane forming a poka yoke.

4. A fastener according to any one of the preceding claims, **characterised in that** it comprises at least one wing (49) defining with the wall (15) a U shaped zone , the claw (17) being inclined towards the interior of the U.

5. A fastener according to claim 4, **characterised in that** the wing (49) has a portion (53) substantially parallel to the wall (15) and situated so as to be facing the orifice (19).

6. A fastener according to claim 4 or 5, **characterised in that** the wall (15) includes two claws (17), the fastener comprising two wings (49) and one resilient plate (18 integrally attached to the wall (15) and intended to cooperate with the second component part (5), the resilient plate (18) being situated between the two wings (49), the fastener having empty spaces (55) between the resilient plate (18) and the two wings (49).

7. A fastening device comprising a housing (11) arranged on the first component part (3), and a fastener (12) according to any one of the preceding claims, with the wall (15) bearing the claw (17) being adapted to be engaged in the said housing (11).

8. A fastening device according to claim 7, **characterised in that** the housing (11) is delimited by the gripping wall (65) and by a rear supporting wall (67) positioned to be substantially facing each other, the wall (15) of the fastener being adapted to be engaged in the housing (11) in a position where the claw (17) is in abutment against the gripping wall (65) and wherein a second surface (47) of the wall (15) positioned opposite the first surface (32), is supported on the rear supporting wall (67).

9. A fastening device according to claim 8, **characterised in that** the zone of the said wall (15) of the fastener in which the orifice is formed (19) is part of a plane, the wall (15) including a relief (45) projecting outwards in relation to the said plane forming a poka yoke, one of the gripping wall and the rear supporting wall (65, 67) of the housing (11) comprising a recessed relief (71) for receiving the relief projecting outwards (45) when the wall (15) is engaged in the housing (11).

10. A fastening device according to the any one of claims 7 to 9, **characterised in that** the gripping wall (65) of the housing (11) bears at least one reinforcing rib (73) in a zone intended to come into contact with the claw (17).

11. A manufacturing method for manufacturing a resilient fastener according to any one of claims 1 to 6, **characterised in that** it includes the following steps:
- obtaining a blank fastener made out of a metal material, with a solid wall (15);
- cutting out the second zone (41) in the wall (15), by thereby forming the second lateral edge (27) of the claw (17);
- folding the claw (17) by tearing the metal material along a junction between the first lateral edge (25) of the claw (17) and the edge (43) of the orifice (19).
